(19) Europäisches Patentamt

European Patent Office

Office européen des brevets

(11) Veröffentlichungsnummer: **0 531 900 A1**

# (12) EUROPÄISCHE PATENTANMELDUNG

(21) Anmeldenummer: **92115153.6**

(22) Anmeldetag: **03.09.92**

(51) Int. Cl.⁵: **A22C 17/00, A23B 4/06**

(30) Priorität: **04.09.91 DE 4129416**

(43) Veröffentlichungstag der Anmeldung:
**17.03.93 Patentblatt 93/11**

(84) Benannte Vertragsstaaten:
**AT BE CH DE DK ES FR GB GR IE IT LI LU NL PT**

(71) Anmelder: **SÜDFLEISCH GmbH**
**Zenettiplatz 1**
**W-8000 München 2(DE)**

(72) Erfinder: **Gilles, Christian**
**Tschaikowskistrasse 27**
**W-3410 Northeim(DE)**

(74) Vertreter: **Riederer Freiherr von Paar zu**
**Schönau, Anton et al**
**Lederer, Keller & Riederer, Freyung 615,**
**Postfach 26 64**
**W-8300 Landshut (DE)**

(54) **Verfahren zur Herstellung von Hackfleisch.**

(57) Das erfindungsgemäße Verfahren zur Herstellung von Hackfleisch durch Zerkleinerung von Muskelfleisch von Schlachttieren ist dadurch gekennzeichnet, daß man unmittelbar nacheinander Fleischstücke von frisch geschlachteten und zerlegten Tieren noch vor Eintreten des rigor mortis in einem geeigneten Gerät wie einem Kutter zerkleinert und durch Zugabe von Kühlmitteln schockfrostet, bis eine Fleischtemperatur von -1,6°C bis -10°C, vorzugsweise -8°C, erreicht ist und dann bis zum Erreichen der erwünschten Körnung weiter zerkleinert. Vorzugsweise wird das gekörnte Fleisch sogleich tiefgekühlt. Das Produkt wird dann in Verpackungen portioniert, die man, eventuell nach einem Gasaustausch, hermetisch verschließt. Das Hackfleisch ist dadurch vollständig frisch, nahezu bakterienfrei und lange Zeit von natürlicher Farbe.

EP 0 531 900 A1

Die Erfindung bezieht sich auf ein Verfahren zur Herstellung von Hackfleisch durch Zerkleinerung von Muskelfleisch von Schlachttieren. Nach Schätzungen wird ca. 25 % des Fleisches als Hackfleisch verkauft.

Für die Herstellung von Hackfleisch gibt es in verschiedenen Ländern gesetzlich vorgeschriebene Rahmenbedingungen. So ist es in Deutschland durch die Hackfleischverordnung vorgeschrieben, daß im Fall von Rind-Hackfleisch dieses nur einen Fettgehalt von maximal 20 % haben darf und eine Portion nur von einem einzigen Tier, und zwar aus dem Vorderviertel stammen darf, wobei nur bestimmte Fleischteile zugelassen sind. Hackfleisch aus gekühltem Fleisch wird zur Zeit nur nach vollendeter Muskelstarre (rigor mortis) hergestellt, das biochemisch bereits durch den Abbau der energiereichen Phosphate gereift und durch Kühlung, Reifung, Lagerung und Transport hygienisch belastet ist. Frisches Hackfleisch darf nur am Tag seiner Herstellung und gefrorenes Hackfleisch nur innerhalb von drei Monaten nach Herstellung verkauft werden.

In der Praxis erlebt jedoch das Fleisch bereits vor der Weiterverarbeitung zu Hackfleisch eine erhebliche Qualitätseinbuße. Soweit die Hackfleischherstellung beim Metzger betroffen ist, hängt das geschlachtete Tier zunächst einige Tage im Kühlhaus, bevor es transportiert und zerlegt wird, und erlebt im Ladengeschäft wiederum ein mehrmaliges Handhaben in den bzw. aus dem Kühlraum. Jeden Morgen wird eine Portion des Fleischs im Wolf zerkleinert, wobei der Wolf Fleischstücke in der Größenordnung von 4 bis 5 cm Durchmesser aufnimmt. Ersichtlich wird das Fleisch vielmals mit der Hand ergriffen und zunehmend mikrobiologisch kontaminiert, wobei es ständig in einen immer schlechteren Zustand gerät.

Bei der Hackfleischherstellung im Lebensmitteleinzelhandel wird das Fleisch meist in Vierteln vom Schlachthof transportiert und vor dem Verkauf zerlegt und zerkleinert, oder die Zerlegung mit und ohne Verpackung findet im Schlachtbetrieb oder als zusätzliche Handelsstufe in speziellen Zerlege- und Verpakkungsbetrieben statt, die das Fleisch zerteilt an die Einzelhändler verkaufen. Im Einzelhandel werden die Verpackungen geöffnet oder das unverpackte Fleisch wird je nach der Größe der Eingangsöffnung des Wolfs für das Hackfleisch in Stücke geschnitten und dem Wolf eingegeben. Im verpackten, insbesondere vakuumverpackten Zustand verliert das Fleisch viel Saft, in dem sich trotz der Kühlung viele Bakterien sammeln. Wiederum stellt die mikrobiologische Kontamination ein erhebliches Problem dar.

Zur Herstellung von gefriergetrocknetem Fleisch, das für die Erzeugung von Brühwurst geeignet ist, ist es bekannt (DE-A 31 07 576), schlachtwarmes Fleisch noch vor Eintritt der Muskelstarre zu verarbeiten, wofür das schiere Muskelfleisch zunächst zur Hemmung der Muskelstarre gesalzen wird. Diese Salzung führt jedoch zu einem Eiweißaustritt und zu einem Schmiereffekt, der das Produkts für Hackfleisch uneeignet macht.

Im Rahmen der Hackfleischherstellung ist es auch bekannt (Patent Abstracts of Japan 58-101641 (A)), Fleisch in gekühltem Zustand von -2°C bis -10°C zu zerkleinern und das Produkt anschließend zu extrudieren. In der Praxis wird das so erzielte Produkt zumeist als Tierfutter verwertet. Die Probleme der Qualitätsverbesserung von Hackfleisch lassen sich mit diesen Techniken nicht lösen.

Demgegenüber liegt der Erfindung die Aufgabe zugrunde, bei der Hackfleischherstellungmikrobiologische Kontamination weitmöglichst zu vermeiden und das Hackfleisch hinsichtlich Farbstabilität, Geruch und Geschmack sowie mikrobakterieller Widerstandsfähigkeit in einem Zustand zu erhalten, wie er für schlachtwarmes Fleisch durch sein hohes Redoxpotential und vor Abbau der energiereichen Phosphatverbindungen typisch ist.

Dies wird durch die im Anspruch 1 gekennzeichnete Erfindung gelöst. Die Vermeidung des Eintretens des rigor mortis wird ohne Zugabe von Salz oder anderen Chemikalien durch sehr schnelle Abfolge der Verarbeitungsschnitte erreicht.

Die Bedeutung der Erfindung wird aus den Vorteilen ersichtlich, die sich bei der Hackfleischherstellung aus schlachtwarmem Fleisch ergeben, nämlich:
- Die Oberfläche der frisch enthäuteten Tierkörper trägt lediglich die unvermeidbare aber noch sehr geringe Kontamination des Enthäutens und Eviscerierens. Es befindet sich noch keine kältetolerante Kühlhausflora auf der Fleischoberfläche.
- Die Kontaminationsflora hat keine Zeit, sich zu vermehren.
- Aus einer geringen Kontamination der Schlachtkörperoberfächen resultiert eine geringe Kontamination der Gerätschaften und Hände und damit der frischen Oberflächen der geschierten Fleischstücke.
- Schlachtwarmes Fleisch hat durch den noch hohen Anteil an Adenosintriphosphat (ATP) ein sehr gutes Wasserbindungsvermögen, d. h. die für den Bakterienstoffwechsel zur Verfügung stehende freie Wassermenge ist äußerst gering. Dies gilt auch für eine mögliche Auftauphase.
- Die Granulatstruktur des nach Anspruch 2 gefrosteten Hackfleischs gewährt dem Konsumenten darüber hinaus noch weitere küchenhygienische Vorteile. Das fast rieselfähige Granulat ermöglicht ein Teilen von Portionen im gefrosteten Zustand. Zur Herstellung von Hackfleischprodukten (Soßengerichte, Frikadellen) ist ein vorheriges Auftauen unnötig. Die Einarbeitung von Salz und Gewürzen ist im unaufgetauten Zustand möglich.

- Bis zur vollständigen Frostung vergehen bei dem neuen Verfahren nur 90 Minuten, bei der bisherigen Technik dauert dies wenigstens 24 Stunden, häufig mehrere Tage.

Bei der Hackfleischherstellung entsprechend der Erfindung wird der Abbau von Adenosintriphosphat (ATP) zu Adenosindiphosphat (ADP) sehr gering gehalten. Der hohe Anteil von ATP im schlachtwarmen Fleisch bedingt das sehr gute Wasserbindungsvermögen.

Bei der weiteren Verwendung des im erfindungsgemäßen Verfahren hergestellten gefrosteten Hackfleisches ergeben sich hygienische Vorteile, die aus der Granulatstruktur des Produktes resultieren. Diese ermöglicht ein Portionieren im gefrosteten Zustand und die Einarbeitung der Gewürze.

Gemäß der Erfindung wird das schlachtwarme Fleisch innerhalb der ersten zwei Stunden nach dem Tod des Tieres gewonnen, schockgekühlt und mittels eines geeigneten Gerätes zerkleinert. Hierbei sind als Zerkleinerungsgeräte Kutter und Wolf prädestiniert, wobei der Kutter zu bevorzugen ist, da er einen stetigen Betrieb ohne Umladen der Zwischenprodukte zwischen den Verfahrensschnitten ermöglicht. Die Applikation der Erfindung auf den Einsatz eines Fleischwolfes ist andererseits zum Beispiel durch die Verwendung eines aus DE 27 46 176 an sich bekannten Gerätes mit Kühlung während der Zerkleinerung möglich.

Zweckmäßigerweise erfolgt die Kühlung mit einem flüssigen oder festen inerten Gas, z. B. flüssigem Stickstoff, wie es für Kutter z. B. aus der DE-A1-33 47 937 an sich bekannt ist, und zwar bis zu einer Temperatur von zwischen -2°C und -10°C. Als gute Schneidtemperatur bei der Verwendung eines Kutters hat sich eine Temperater von -8°C erwiesen, bei noch tieferen Temperaturen bildet sich dann aber beim Zerkleinern viel Staub, der im Produkt als Schönheitsfehler empfunden wird. Diese Schockfrostung und Zerkleinerung läßt sich in kürzester Zeit durchführen, wobei eine Bearbeitungszeit von ca. 6 Minuten erreichbar ist.

Eine bevorzugte Verfahrensdurchführung sieht folgendermaßen aus:

Sofern es sich um Rindfleisch handelt, beginnt man sofort nach der Schlachtung, also etwa 20 bis 45 Minuten je nach Schlachthof, mit der Zerlegung des Rindes, was vielleicht nochmal 30 Minuten dauert. Beim Zerlegen wird aus dem unmittelbar schlachtwarm anfallenden Fleisch die Muskulatur von Knochen und Sehnen sowie von anhaftendem Fett befreit. Die resultierenden Fleischstücke, welche ein Gewicht von ca. 1/2 kg bis 10 kg, im Mittel etwa 4 bis 5 kg, haben, werden dann sofort in das Zerkleinerungsgerät gegeben. Damit sind die Angriffe der menschlichen Hand am Fleisch beendet, es war nur kurz der Umwelt ausgesetzt und die mikrobiologische Kontamination ist noch sehr gering, zumal wenn im Bereich der Zerlegung auf höchste Reinlichkeit geachtet wird. Der Kutter, als Beispiel eines Zerkleinerungsgerätes, läuft nun unter Luftausschluß, d. h. mit geschlossenem Deckel, kurzzeitig im Schneidgang etwa zwei Runden lang, wodurch eine erste Vorzerkleinerung bis zu streifenförmigen Stücken von ca. 3 bis 8 cm stattfindet, woraufhin man den Mischgang einschaltet und Flüssigstickstoff hinzufügt. Im Mischgang wird nun das Fleisch, wenn es anschließend tiefgefroren werden soll, zunächst vorzugsweise auf -8°C gekühlt, wofür dieser Vorgang der Flüssigstickstoffbeimischung und Frostung ca. 160 Sekunden lang durchgeführt wird. Jedenfalls sollte auf mindestens -1,6°C gekühlt werden. Nun wird wieder der Schneidgang des Kutters eingeschaltet und das gefrostete Fleisch je nach dem angestrebten Artikel auf die gewünschte Körnung zerkleinert, im allgemeinen auf einen Fleischkorndurchmesser von 2 mm bis 6 mm.

Das so entstandene Produkt kann nun unmittelbar als frisches Hackfleisch entnommen werden. Bevorzugterweise wird es jedoch sofort an Ort und Stelle durch weiteres Frosten tiefgefroren.

Nach diesem zweiten Schneidgang wird also zur Tieffrostung erneut der Mischgang mit Zufuhr von Flüssigstickstoff eingeschaltet und das gekörnte Fleisch wird auf -18°C bis -30°C gekühlt. Das tiefgekühlte Hackfleischgranulat wird anschließend über ein speziell gekühltes Transportsystem in Verpackungen portioniert, die hermetisch verschließbar sind. Vor dem Verschließen wird jedoch insbesondere bei Schweine-Hackfleisch, das gegen Frostbrand empfindlich ist, die in den Zwischenräumen zwischen den Fleischkörnern befindliche Luft gegen ein Schutzgasgemisch ausgetauscht, woraufhin die Verpackung geschlossen, mit den notwendigen Kennzeichnungen versehen und tiefgekühlt gelagert wird.

Der Ablauf des Verfahrens gemäß der Erfindung kann anhand eines anliegenden Schemas deutlich gemacht werden. Dieses zeigt einen beispielsweisen Ablaufplan zur Herstellung von Hackfleisch gemäß der Erfindung.

Das Schema geht von Hackfleisch von Rindern oder Schweinen 1 aus. Der erste Verfahrensschritt umfaßt das Schlachten, Enthäuten und Ausweiden. Wie sich an dem symbolischen Zeitstrahl Z ablesen läßt, sind dafür je nach Schlachthof ca. 20 bis 45 Minuten erforderlich. Die Tierteile 2 werden im nächsten Schritt grob zerlegt, wodurch Fleischstücke 3 von jeweils einigen Kilogramm Gewicht entstehen, und sind somit für die maschinelle Bearbeitung vorbereitet. Die ersten beiden Verfahrensschritte sind nach ca. 75 Minuten abgeschlossen. Damit endet auch der händische Eingriff am zu verarbeitenden Fleisch.

Die Fleischstücke 3 werden in einen Kutter 4 gegeben und dort erfolgt nun noch vor Eintritt der Muskelstarre ohne Zugabe von Salz oder sonstigen Chemikalien, die nach dem Stand der Technik zur Hemmung der Muskelstarre zugefügt werden, ein erstes Zerkleinern der groben Fleischstücke 3, indem der Kutter im Schneidgang etwa zwei Runden läuft; als Ergebnis liegen etwa streifenförmige Stücke 5 von einigen cm Länge, ca. 20 bis 100 g Gewicht und einer Temperatur von etwa 30°C vor.

Durch den Einsatz eines Kühlmittels 6, nämlich beim beschriebenen Beispiel von flüssigem Stickstoff, werden im Mischgang des Kutters unmittelbar anschließend an den vorher beschriebenen Schneidgang die Fleischstücke 5 nun schnell abgekühlt auf eine Höchsttemperatur von -1,6°C, was die Kälte-Erstarrungstemperatur des Fleisches ist, und werden vorzugsweise, wenn das Hackfleisch anschließend tiefgefroren werden soll, schockgefrostet. Bei der Verwendung des Kutters 4 erweist sich eine Temperatur von -8°C als optimale Schneidtemperatur. Über 0°C würde sich beim anschließenden schneiden des Fleischs keine körnige, sondern eine breiige Masse ergeben. Die Kühlzeit kann zwischen 2 und 3 Minuten oder auch etwas länger betragen.

An das Kühlen bzw. Schockfrosten schließt sich sofort durch einen erneuten Schneidgang im Kutter die weitere Zerkleinerung der Fleischstücke 5 bis zur gewünschten Körnung an. Damit liegt bereits die endgültige Hackfleischmasse 7 vor.

Ebenfalls im Kutter 4 wird die Hackfleischmasse 7 durch weitere zugabe des Kühlmittels 6 nun tiefgekühlt. Die Zugabe des Kühlmittels kann schon beginnen, bevor der vorhergehende Schneidgang ganz beendet ist. Temperaturen von ca. -18°C bis -30°C sind üblich.

Die jetzt tiefgekühlte körnige Hackfleischmasse 7 kann nun automatisch aus dem Kutter 4 entfernt werden, wobei sich ein Kühlen der Transportmittel als günstig erweist. Der letzte Schritt des Verfahrens besteht darin, die gefrostete Hackfleischmasse mit Hilfe gekühlter Portionier- und Verpackungsmaschinen 10 zu verpacken und entsprechend zu portionieren. Auch diese Maschinen 10 sind vorzugsweise gekühlt. Vorzugweise wird in der Verpackungsstrecke mit den Portionier- und Verpackungsmaschinen 10 das Hackfleisch hermetisch versiegelt und die Luft gegen ein Schutzgas 11 ausgetauscht. Die einzelnen Hackfleischportionen 12 können nun an die Endverbraucher 13 abgegeben werden.

Wie am Zeitstrahl Z erkennbar, sind vom Eingeben in den Kutter 4 bis zum Verschließen der Verpackung ca. 6 Minuten vergangen. Eine Berührung erfolgt nur in den ersten Verfahrensschritten. Das Fleisch ist vollkommen frisch verarbeitet und tiefgefroren und hat einen sehr keimarmen Status, wodurch sich für den Verbraucher ein sehr hohes Maß an Produktsicherheit ergibt. Im Gegensatz zu üblichem Hackfleisch, das in atmosphärischer Umgebung bereits nach kurzer Zeit seine natürliche fleischrote Farbe verliert, läßt sich durch den beschriebenen Vorgang die natürliche Farbe und der für schlachtfrisches Fleisch typische intensive Geruch und Geschmack sehr lang erhalten. Eine Graufärbung tritt nicht auf, die hellrote Fleischfarbe wird beim späteren Tauen sogar wieder belebt und aufgefrischt. Dies geschieht durch eine erneute Oxygenierung des Muskelfarbstoffs Myoglobin und die damit verbundene Umwandlung zu Oxymyoglobin. Ein weiterer Vorteil der Anwendung des sofort nach dem Schlachten erfolgenden Tiefkühlens besteht darin, daß möglicherweise im Fleisch vorhandene und bei der Fleischbeschau nicht festgestellte Parasiten, wie Bandwurmfinnen, Trichinen, Toxoplasmen und Sarkosporidien, sicher abgetötet werden. Der Rohkonsum des Hackfleischs, beispielsweise in Form von Tartar, ist bedenkenlos möglich. Die natürliche Farbe wird auch bei Schweinefleisch durch die Schutzgasatmosphäre über lange Zeit hinweg aufrechterhalten. Das Verfahren eignet sich also sowohl für Rindfleisch als auch für Schweinefleisch, wobei es möglich ist, nach dem Zerkleinern zusätzlich Gewürze wie Salz und Pfeffer zuzumischen.

Soll statt des Kutters mit dem Wolf gearbeitet werden, so wird folgende Folge vorgeschlagen:

1. Zur Vorzerkleinerung dreht ein normaler Wolf, z. B. mit einer 8-mm-Lochscheibe.

2. Zur Kühlung und weiteren Zerkleinerung benötigt man eine gekühlte Misch- und Transportschnecke, die auf maximal -1,6°C herunterkühlen können muß und hierfür eine Länge in der Größenordnung von 1 Meter haben soll.

3. Vorne an der Schnecke sitzt eine Schneidvorrichtung, die die gekühlten Fleischstücke zu Hackfleisch schneidet.

Wiederum erfolgen diese Schritte in schneller Aufeinanderfolge.

Andere Zerkleinerungsgeräte als Kutter und Wolf sind ebenfalls denkbar, wenn sie mit einer Kühleinrichtung ausgestattet werden.

In anliegender Tabelle sind Daten hinsichtlich des Keimbefalls von erfindungsgemäß hergestelltem Hackfleisch nach dem Auftauen angegeben.

| Hackfleisch-sorten | Aerobe mesophile Keime KbE/g | Koli-bakterien (Entero.) KbE/g | Sulfitre-duzierende Anaerobier KbE/g | Staphylo-coccus aureus KbE/g | Salmo-nellen in 25 g |
|---|---|---|---|---|---|
| Tatar | | | | | |
| 1 | $1,3 \times 10^4$ | $1,3 \times 10^2$ | <10 | <50 | n.n. |
| 2 | $7,3 \times 10^3$ | $1,3 \times 10^2$ | <10 | <50 | n.n. |
| 3 | $8,0 \times 10^3$ | $1,1 \times 10^2$ | <10 | <50 | n.n. |
| 4 | $3,5 \times 10^4$ | $1,0 \times 10^2$ | <10 | <50 | n.n. |
| 5 | $8,0 \times 10^3$ | $1,0 \times 10^2$ | <10 | <50 | n.n. |
| Rind 12 % Fett | | | | | |
| 1 | $7,0 \times 10^3$ | 13 | <10 | <50 | n.n. |
| 2 | $7,5 \times 10^3$ | 3 | <10 | <50 | n.n. |
| 3 | $2,3 \times 10^3$ | 50 | <10 | <50 | n.n. |
| 4 | $5,0 \times 10^3$ | 90 | <10 | <50 | n.n. |
| 5 | $5,0 \times 10^3$ | 50 | <10 | <50 | n.n. |
| Rind 20 % Fett | | | | | |
| 1 | $7,0 \times 10^3$ | 15 | <10 | <50 | n.n. |
| 2 | $4,3 \times 10^3$ | 35 | <10 | <50 | n.n. |
| 3 | $5,5 \times 10^3$ | 20 | <10 | <50 | n.n. |
| 4 | $4,0 \times 10^3$ | 5 | <10 | <50 | n.n. |
| 5 | $4,0 \times 10^3$ | 3 | <10 | <50 | n.n. |
| Schw. Mett | | | | | |
| 1 | $5,5 \times 10^3$ | 50 | <10 | <50 | n.n. |
| 2 | $3,5 \times 10^3$ | 50 | <10 | <50 | n.n. |
| 3 | $6,0 \times 10^3$ | 23 | <10 | <50 | n.n. |
| 4 | $4,5 \times 10^3$ | 25 | <10 | <50 | n.n. |
| 5 | $7,0 \times 10^3$ | 50 | <10 | <50 | n.n. |
| Grenz- m werte M | $5 \times 10^5$ $5 \times 10^6$ | 50 $5 \times 10^2$ | 10 100 | 50 $5 \times 10^2$ | n.n. in 25 g |

Zeichenerklärung:
n.n. = nicht nachweisbar;   m = zufriedenstellender Wert;
M = maximaler Grenzwert

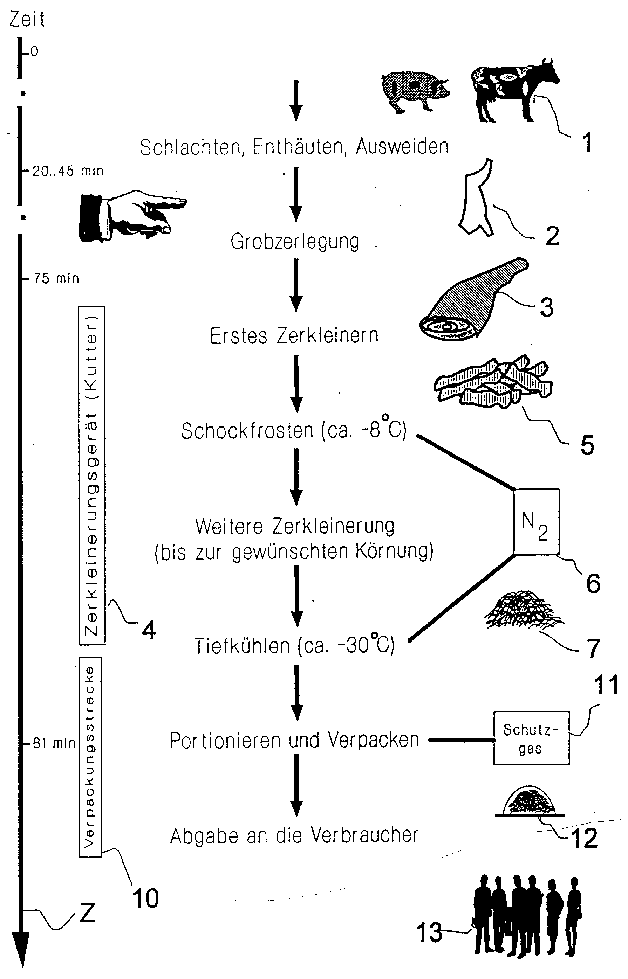

**Patentansprüche**

1. Verfahren zur Herstellung von Hackfleisch durch Zerkleinerung von Muskelfleisch von Schlachttieren (1), dadurch gekennzeichnet, daß man Fleischstücke (3) der frisch geschlachteten und zerlegten Tiere (1) noch vor Eintreten der Muskelstarre (rigor mortis) in einem Zerkleinerungsgerät (4) weiter zerkleinert und schockfrostet, bis eine Fleischtemperatur unter 0° C erreicht ist, und dann bis zum Erreichen der erwünschten Körnung (5) weiter zerkleinert, und daß man diese Arbeitsgänge unmittelbar nacheinander ausführt, wobei man die Muskelstarre der Fleischstücke (3, 5) durch die sofortige Weiterverarbeitung ohne den Zusatz von Salz oder anderen Chemikalien verhindert.

**2.** Verfahren nach Anspruch 1, dadurch gekennzeichnet, daß man nach oder teilweise schon während der weiteren Zerkleinerung das gekörnte Fleisch noch im Zerkleinerungsgerät (8) tiefkühlt und dann in Verpackungen portioniert, die man hermetisch verschließt.

**3.** Verfahren nach Ansprüche 1 oder 2, dadurch gekennzeichnet, daß man die Verfahrensschritte, das Fleisch zu zerkleinern, bis zu einer Temperatur unter 0°C schockzufrosten, es weiter zu zerkleinern und gegebenenfalls es tiefzukühlen, in einem Kutter (4) durchführt.

**4.** Verfahren nach einem der Ansprüche 1 bis 3, dadurch gekennzeichnet, daß man die Fleischstücke (5) im Zerkleinerungsgerät (4) vor dem weiteren Zerkleinern auf eine Temperatur von -6°C bis -10°C, vorzugsweise -8°C, schockfrostet.

**5.** Verfahren nach einem der Ansprüche 1 bis 4, dadurch gekennzeichnet, daß man zum Schockfrosten und gegebenenfalls zum anschließenden Tiefkühlen im Zerkleinerungsgerät (4) flüssige oder feste inerte Gase, vorzugsweise flüssigen Stickstoff (6), beimischt.

**6.** Verfahren nach einem der Ansprüche 1 bis 5, dadurch gekennzeichnet, daß man als Fleischstücke (3) der frisch geschlachtetn und zerlegten Tiere solche von 0,5 bis 10 Kilogramm Gewicht in das Zerkleinerungsgerät (4) gibt und sie vor dem Schockfrosten zu Fleischstücken (5) von 20 g bis 100 g Gewicht zerkleinert.

**7.** Verfahren nach dem auf Anspruch 3 rückbezogenen Anspruch 6, dadurch gekennzeichnet, daß man den Kutter (4) nach dem Eingeben der Fleischstücke (3) der frisch geschlachteten und zerlegten Tiere zunächst mit geschlossenem Deckel zwei Runden laufen läßt und dann mit der Schockfrostung beginnt.

**8.** Verfahren nach einem der Ansprüche 1 bis 7, dadurch gekennzeichnet, daß man zum Portionieren und Verpacken des gekörnten Fleischs (5) dieses vom Kutter berührungsfrei in eine automatische Verpak-kungsstraße (10) leitet und die in den Verpackungen noch befindliche Luft absaugt und gegen ein Schutzgas (11) austauscht.

**9.** Verfahren nach dem auf Anspruch 2 rückbezogenen Anspruch 7, dadurch gekennzeichnet, daß man Transportkanäle vom Zerkleinerungsgerät (4) zur Verpackungsstraße (10) und die Verpackungsstraße kühlt.

**10.** Verfahren nach Anspruch 1 oder 2, dadurch gekennzeichnet, daß man zum Zerkleinern und Schockfrosten auf eine Temperatur zwischen -6°C und -10°C einen Wolf benutzt, wobei das Schockfrosten im Bereich einer Misch- und Transportschnecke erfolgt.

Zeit

0

20..45 min

75 min

81 min

Z

Schlachten, Enthäuten, Ausweiden — 1

Grobzerlegung — 2

Erstes Zerkleinern — 3

Schockfrosten (ca. -8°C) — 5

Weitere Zerkleinerung
(bis zur gewünschten Körnung) — N$_2$ — 6 — 7

Tiefkühlen (ca. -30°C)

Portionieren und Verpacken — Schutz-gas — 11 — 12

Abgabe an die Verbraucher — 13

Zerkleinerungsgerät (Kutter) — 4

Verpackungsstrecke — 10

Europäisches
Patentamt

**EUROPÄISCHER RECHERCHENBERICHT**

Nummer der Anmeldung

EP    92 11 5153

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | DE-A-3 107 576 (DEDERER)<br>* das ganze Dokument *<br>--- | 1,10 | A22C17/00<br>A23B4/06 |
| A | DE-C-1 131 078 (OSCAR MAYER)<br>* das ganze Dokument *<br>--- | 1,3 | |
| A | WO-A-8 400 472 (FRADIN)<br>* das ganze Dokument *<br>--- | 1-3,5,9 | |
| A | US-A-3 677 775 (VOGEL)<br>--- | | |
| A | US-A-2 907 662 (COVEY)<br>--- | | |
| A | FR-A-1 572 357 (FRADIN)<br>--- | | |
| A | FR-A-2 513 856 (LERMUZEAUX)<br><br>----- | | |
| | | | **RECHERCHIERTE SACHGEBIETE (Int. Cl.5 )**<br><br>A22C<br>A22B<br>A23B<br>A23L |

Der vorliegende Recherchenbericht wurde für alle Patentansprüche erstellt

| Recherchenort | Abschlußdatum der Recherche | Prüfer |
|---|---|---|
| DEN HAAG | 17 DEZEMBER 1992 | DE LAMEILLIEURE D. |